# EUROPEAN PATENT SPECIFICATION

(11) **EP 2 033 885 B1**
(45) Date of publication and mention of the grant of the patent: **11.11.2009**
(21) Application number: 07017317.4
(22) Date of filing: 04.09.2007
(51) Int. Cl.: B62J 23/00, B62J 17/02

(54) **A side cover assembly for a motorcycle and a motorcycle equipped with such a side cover assembly**
Seitenabdeckungsanordnung für ein Motorrad und mit einer solchen Seitenabdeckungsanordnung ausgestattetes Motorrad
Ensemble de protection latérale pour motocyclette et motocyclette équipée d'un tel ensemble de protection latérale

(43) Date of publication of application: 11.03.2009
(73) Proprietor: Yamaha Motor Research & Development Europe s.r.l., 20050 Gerno di Lesmo (MI) (IT)
(72) Inventor: Zonca, Silvano, 20058 Villasanta (MI) (IT)
(74) Representative: Grünecker, Kinkeldey, Stockmair & Schwanhäusser Anwaltssozietät

(56) References cited:
- EP-A- 1 785 344
- JP-A- 1 204 877
- JP-A- 6 072 372
- US-A1- 2006 254 844

## Description

The present invention relates to the field of motorcycles. In particular, the present invention relates to a side cover assembly for a motorcycle and a respective motorcycle equipped with such a side cover assembly. In more detail, the present invention relates to a side cover assembly comprising side cover elements adapted to be mounted to a motorcycle on opposite sides thereof. Still in more detail, the present invention relates to the purpose to be exploited by said side cover elements and to the way said side cover elements are mounted to and removed from a motorcycle.

In the field of motorcycles it is a common practice to provide side cover elements mounted to the motorcycle on opposite sides thereof for the purpose of protecting component parts, accessories and/or even equipment located in the space below the fuel tank and defined by said side cover elements, in combination. In particular, said component parts and/or equipment to be protected may comprise the engine or parts thereof, the cooling system, the induction system or the like. Moreover, it is well known in the field of motorcycles, that during the design of side cover elements adapted to exploit the purpose or function stated above, attention has to be paid, not only to the protection to be achieved, which in turn depends on the resistance offered by said side cover elements to impacts, shocks or the like, but also to the appearance and look or even shape of said side cover elements. Furthermore, it has to be taken into particular consideration that said side cover elements (in the following also referred to as covering elements) once mounted to the motorcycle will influence not only the overall look and appearance of said motorcycle, but also its aerodynamic or the like, which will therefore, influence the overall performance of the motorcycle in terms of speed and fuel consumption. Additionally, special attention has also to be paid to the way this protecting and/or covering elements will be mounted to the motorcycle and removed there from as the need arises. In fact, if the mounting process or operation would reveal to be unduly long and/or troublesome, assembly of the overall motorcycle could also reveal to be difficult and/or troublesome, resulting in the assembly operation being unduly elongated, so that the production and manufacturing costs would also unduly increase, accordingly. The same considerations as stated above also apply to the removal and reassembly of said covering elements as soon as the need arises to remove them from the motorcycle, for instance to gain access to component parts of said motorcycle for the purpose of repairing and/or substituting same. Should it be revealed to be too difficult or troublesome to remove said covering elements from the motorcycle, the maintenance operations to be carried out would also be unduly elongated and troublesome, thus negatively affecting the maintenance costs, which would also unduly increase, accordingly. As anticipated above, the protection to be achieved by means of side covering elements has to be taken into great consideration during the design of said side covering elements. For instance, the question arises during the design, which component parts of the motorcycle have to be protected so as to avoid damage in case of impact or accident. In fact, if for instance all the equipment (or most of them) located in the area below the fuel tank have to be protected, then quite large covering elements have to be provided, extending downward from the fuel tank (or even partially covering same) to approximately the pedals of the motorcycle. However, the dimension and shape of side covering elements also influences the way same may be mounted to and removed from the motorcycle; in other words, large or bulky side covering elements usually require special solutions allowing to mount them to the motorcycle. Moreover, if large or bulky covering elements are used, also the overall dimensions of the motorcycle increase, so that the aerodynamics of the motorcycle may be negatively influenced. The overall look and appearance of the motorcycle may equally be negatively influenced if too large or bulky side covering elements are used. A further question arising during the design of side covering elements relates to the resistance to be offered by said side covering elements to eventual impact, shock or the like. It has in fact to be decided which impacts the side covering elements shall resist to and which impacts shall result in the side covering elements becoming broken or damaged.

Accordingly, much effort has been made in the last years by the manufacturers of motorcycles, in an attempt to find adequate and convenient solutions relating to side covering elements. In particular, much effort has been dedicated to the purpose of finding a convenient balance between resistance and protection offered, overall look and appearance as well as aerodynamics of said side covering elements and finally easiness of mounting and/or assembly.

However, in spite of all the efforts made, finding a convenient solution for easily and quickly mounting and removing as well as for assembling and disassembling side covering elements, with said side covering elements still offering at the same time adequate protection and without negatively effecting the appearance, look and aerodynamic as well as the overall dimensions of the motorcycle has revealed to be a quite difficult task; as a result, the solutions proposed in this sense and known in the prior art may not be regarded as satisfactory as required, the reason for that being as follows.

For instance, for the purpose of providing side covering elements offering strong resistance and adequate protection it was suggested to use heavy elements made for instance of high tensile steel (HTS), anchored and/or fixed to the main frame of the motorcycle. However, when that was done, the weight of the motorcycle unduly increased, thus rendering the driving of the motorcycle not as comfortable as required. Moreover, the main frame had to be designed ad hoc so as to be adapted to cooperate with said side covering elements, in particular so as to provide and/or offer adequate anchoring points for the side covering elements. Moreover, heavy and bulky side covering elements have the further disadvantage that, as soon as the need arises to gain access to component parts and/or equipment located behind the side covering elements (for instance below the fuel tank) for maintenance purposes, the side covering elements (or at least one of them) have to be removed from the motorcycle otherwise the access to said equipment would be obstructed by the side covering elements. However, removing bulky and heavy side covering elements (and mounting them again to the motorcycle once the maintenance operation has been completed) may be revealed to be a very long and difficult task, especially if special anchoring means are provided for the purpose of anchoring said side covering elements to the frame of the motorcycle. Moreover, the anchoring points are usually not easily accessible. A further disadvantage affecting the prior art side covering elements relates to the fact that even, on the one hand, adequate protection is offered so that equipment of the motorcycle does not become easily damaged, on the other hand, even in the case of normal impact or shock, said side covering elements do become damaged, so that they have to be substituted. However, large and heavy side covering elements, for instance made of high tensile steel are quite expensive so that increased costs occur also in the case of normal impact. Moreover, in the case of violent impact, not only the side covering elements become damaged, but also the equipment to be protected or at least some of them, so that additional costs arise. Still a further disadvantage affecting the prior art side covering elements relates to their reduced versatility; in fact, most of them can only be mounted to particular and/or special motorcycles, so that side covering elements had to be designed and provided ad hoc for any particular motorcycle. Moreover, very often, special fixing means were needed for the purpose of fixing the prior art side covering elements to a motorcycle with said special fixing means being adapted to be operated only with corresponding special tools which have to be provided therefore, ad hoc for any particular side covering element. According to other solutions proposed in the past, side covering elements of reduced dimensions and corresponding reduced resistance were suggested; however, in this case, the number of anchoring points allowing to anchor each of said side covering element to the motorcycle (for instance to the frame) increased accordingly, thus elongating and rendering troublesome the assembly operations. Moreover, designing main frames offering an adequate plurality of anchoring points also revealed to be a difficult task. Finally, also finding an adequate location for each of the anchoring points provided revealed to be a difficult task so that in many cases, gaining access to one or more of said anchoring points also revealed troublesome.

Further examples of prior art side cover assemblies can be found in each of documents JP 6072372, JP 1204877, EP 1785344 and US 2006 254844.

Accordingly, in view of the above, it is an object of the present invention to provide a solution allowing to overcome the problems as stated above. In particular it is an object of the present invention to provide a convenient solution allowing side covering elements to be quickly and easily assembled and mounted to a motorcycle, as well as to be quickly removed from said motorcycle. A further object of the present invention is that of providing side covering elements adapted to be quickly mounted to, and removed from a plurality of motorcycles of different kind and/or appearance. A still further object of the present invention is that of providing side covering elements offering adequate protection for equipment and/or accessories of a motorcycle once said side covering elements have been mounted thereto. A further object of the present invention is that of providing side covering elements allowing easy access to at least some equipment of said motorcycle located behind said side covering elements, even without being requested to remove said side covering elements from the motorcycle. A further object of the present invention is that of providing side covering elements of reduced dimensions and weight but still providing a convenient protection and/or resistance to at least normal impacts. Furthermore, it is another object of the present invention that of providing side covering elements which do not negatively influence the overall look, appearance and aerodynamics of the motorcycle but even allows the overall appearance and aerodynamics of the motorcycle to be improved.
In general terms, the present invention is based on the consideration that the problems affecting the prior art solutions, in particular the prior art side covering elements may be overcome if a convenient way to anchor or fix said side covering elements to the motorcycle is provided. In particular a further consideration on which the present invention is based relates to the fact that, if a convenient location for the anchoring or fixing points is provided, then adequate protection is offered, along with an easy way to mount and to remove said side covering elements to and from the motorcycle. Another consideration on which the present invention is based relates to the fact that an adequate and convenient balance between protection offered, overall appearance and aerodynamic, easy mounting and simplified access to equipment of the motorcycle can be found if side covering elements of predefined dimensions and shape are fixed, at least partially, to some of the equipment or component parts of the motorcycle to be protected. In fact, in this way, the need to design special frames for the purpose of anchoring the side covering elements no longer arises. Accordingly, the side covering elements may be mounted to a plurality of different motorcycles. Moreover, the costs of the side covering elements may be kept low and the assembly operations may be speeded up. Furthermore, access to at least some of the equipment of the motorcycle may be obtained even without removing first the side covering elements. Moreover, once the side covering elements become damaged, for instance due to an impact or shock, substituting said side covering element do not reveal to be too expensive. Finally, adequate protection in case of normal impacts or shocks is still provided.

On the basis of the above considerations, the problem posed as stated above are solved by the features of claim1.

Further preferred embodiments of the present invention are laid down in the dependent claims.

Further advantages, objects and features as well as embodiments of the present invention are defined in the appended claims and will become more apparent from the following detailed description when taken with reference to the accompanying drawings, in which identical corresponding parts are identified by the same reference numerals. In particular, in the drawings:
Figure 1a relates to a schematic left side view of a motorcycle equipped with a side cover assembly according to a first embodiment of the present invention;
Figure 1b relates to a schematic right side view of a motorcycle equipped with a side cover assembly according to said first embodiment of the present invention;
Figures 2a, 2ba and 2c shows a left side cover element belonging to the side cover assembly according to a first embodiment of the present invention (Figure 2a), along with details relating to the way said left side cover element is mounted to the motorcycle (Figures 2b and 2c);
Figures 3a, 3b and 3c show a right side cover element belonging to the side cover assembly according to a first embodiment of the present invention (Figure 3a), along with details relating to the way said right side cover element is mounted to the motorcycle (Figures 3b and 3c);
Figure 4a relates to a schematic left side view of a motor cycle equipped with a side cover assembly according to a further embodiment of the present invention;
Figure 4b relates to a schematic right side view of a motorcycle equipped with a side cover assembly according to said further embodiment of the present invention.

While the present invention is described with reference to the embodiments illustrated in the following detailed description as well as in the drawings it should be understood that the following detailed description as well as the drawings are not intended to limit the scope of the present invention to the particular illustrative embodiments disclosed, but rather the described illustrative embodiments merely exemplify the various aspects and features of the present invention, the scope of which is defined by the appended claims.

The present invention is understood to be of particular advantage when applied to motorcycles such as, for instance, motorbikes. For this reason, examples will be given in the following, in which corresponding embodiments of the side cover assembly according to the present invention are applied to motorbikes. However, it has to be appreciated that the applications of the side cover assembly according to the present invention are not limited to the case of motorbikes. On the contrary, the side cover assembly according to the present invention may also be applied to other motorcycles and/or motor vehicles, in particular to three or even four-wheeled motorcycles such as, for instance choppers, quads or the like. The applications of the side cover assembly according to the present invention are even not limited to the particular kind of motorbikes depicted in the drawings.

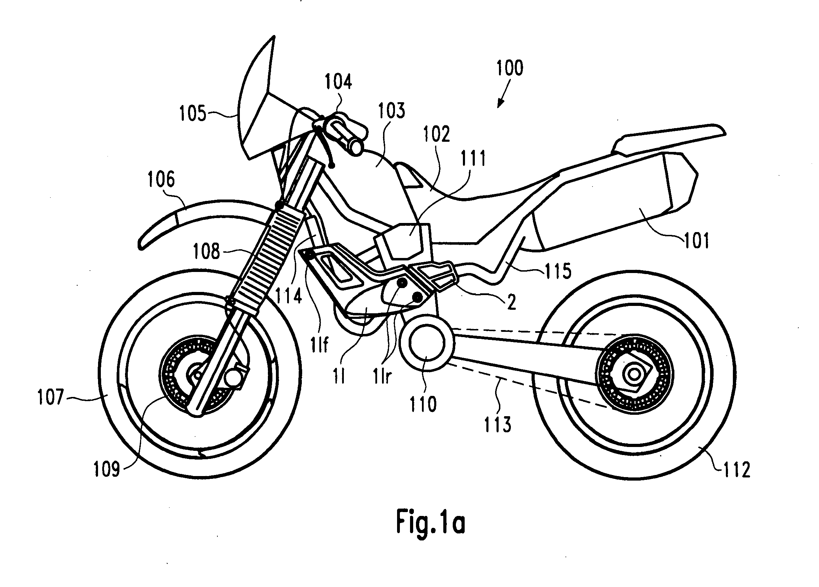

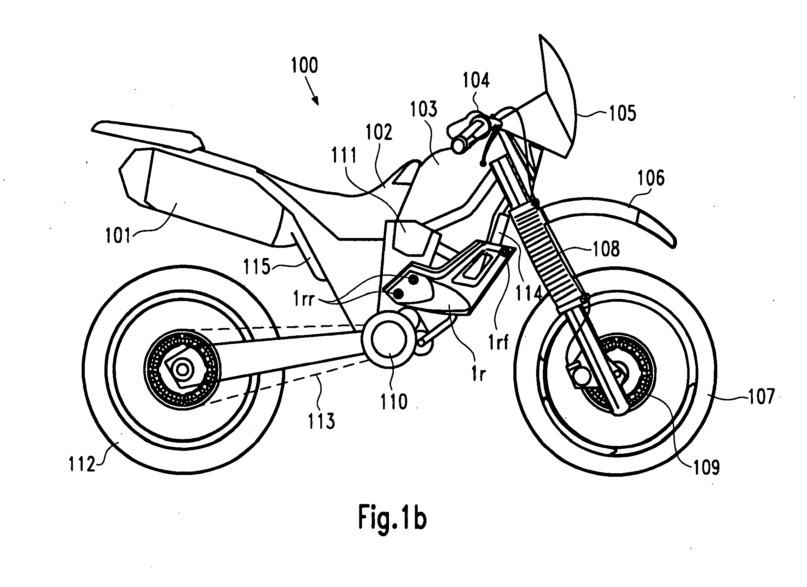

In the following, some details and features of the side cover assembly according to the present invention will be described with reference to Figures 1a and 1b.

In Figures 1a and 1b a motorcycle 100 is depicted. Although in Figures 1 and and 1b some portions or component parts or even accessories or equipments common to usual motorcycles have not been depicted or even identified by reference numerals, the essential features of common motorcycles may be recognized when looking at Figures 1a and 1b. These features relate in particular to a front and a rear wheel 107, 112, with said front wheel 107 comprising a brake disc 109 and being supported by a front fork 108; said front fork 108 supports moreover a front fender 106 provided to avoid the driver and/or passenger or even the motorcycle 100 from being splashed with mud, water or the like lying on the bottom. The motorcycle 100 depicted in Figures 1 and 1b further comprises a fuel tank 103, a seat 102, and a silencer 101 extending from an exhaust gas pipe 115. Depicted in Figures 1a and 1b is also a handlebar 104 provided with brake handles and corresponding cables extending therefrom. A front cowling assembly 105 is mounted to the front portion of the motorcycle 100, with said front cowling assembly 105 being adapted to support equipment of the motorcycle 100 such as, for instance, a speedometer, a fuel level indicator, oil pressure indicator, headlights, front direction indicators or the like. A chain 113 extends from a crank case 110 to the rear wheel 112, said chain 113 transmitting driving force from the crank case 110 to the rear wheel 112. In Figures 1a and 1b the reference numeral 111 identifies the engine (or parts thereof) of the motorcycle 100 depicted therein; said component parts may comprise the cylinder or the like. Since further details of the engine 111 are not strictly essential to the present invention, a further detailed description of said further details may be omitted for the sake of convenience. The motorcycle 100 depicted in Figures 1a and 1b further comprises a radiator or cooling system 114 which will be described in detail in the following.

As anticipated above, some usual component parts and/or features or even equipment and/or accessories of common motorcycles have not been depicted or identified in Figures 1a and 1b for the sake of clarity; the features not depicted and/or identified may relate, for instance, to a rear fork supporting the rear wheel 112, further details of the engine 111 and/or the crank case 110, rear direction indicators, rear lights or even equipment usually belonging to the front covering assembly 105 such as, for example, rear mirrors, headlights, front direction indicators or the like. Even if not strictly essential to the present invention, these omitted features and/or their equivalents have to be considered as being comprised in the motorcycle as depicted in Figures 1a and 1b.

Whilst further details and/or features of the side cover assembly according to the present invention will be comprehensively described in the following, it can be appreciated at present, when looking at Figures 1a and 1b in combination, that the side cover assembly according to the present invention comprises a first side cover element 1l and a second side cover element 1r, adapted to be mounted to the motorcycle on opposite sides thereof. In particular, as depicted in Figures 1a and 1b, the first side cover element 1l is mounted to the left side of the motorcycle 100 by means of mounting and/or fixing means 1lf and 1lr, whilst the second side cover element 1r is mounted to the right side of the motorcycle, still by means of mounting and/or fixing means 1rf and 1rr. Moreover, still with reference to Figures 1a and 1b, 1 the basic considerations on which the present invention is based may be well appreciated. It appears in fact from Figures 1a and 1b that the first and second side cover elements 1l and 1r are mounted to one or more components of the motorcycle 100. In particular, the first and second side cover elements 1l and 1r are mounted to components or equipment of the motorcycle 100 located substantially below the fuel tank 103 and in proximity of the cylinder (not explicitly depicted in the drawings) of the motorcycle 100. As anticipated above, this solution offers easy mounting of the side cover elements 1l and 1r to the motorcycle 100, since it is not necessary to provide for instance a special main frame of the motorcycle adapted to this end. Moreover, the side cover elements 1l and 1r offer adequate protection for the equipment located in the space defined by said side cover elements in combination, at least in case of normal impact and shocks. Furthermore, the reduced dimension of the side cover elements 1l and 1r allows easy access to the equipment of the motorcycle located below the fuel tank 103 and/or in proximity of the cylinder of the motorcycle 100; in particular, this is obtained due to the particular shape of the side cover elements 1l and 1r which, as apparent from Figures 1a and 1b is substantially elongated and curved toward the top, so that enough space is left to an operator requested to work on equipment and/or accessories of the motorcycle located between the first and second side cover elements 1l and 1r. Moreover, easy access is also offered by through apertures provided in each of the side cover elements 1l and 1r. In case of damage due, for instance, to accidental impacts, one or both the side cover elements 1l and 1r may be removed and repaired or substituted, at a low cost and according to simple and quick operations.

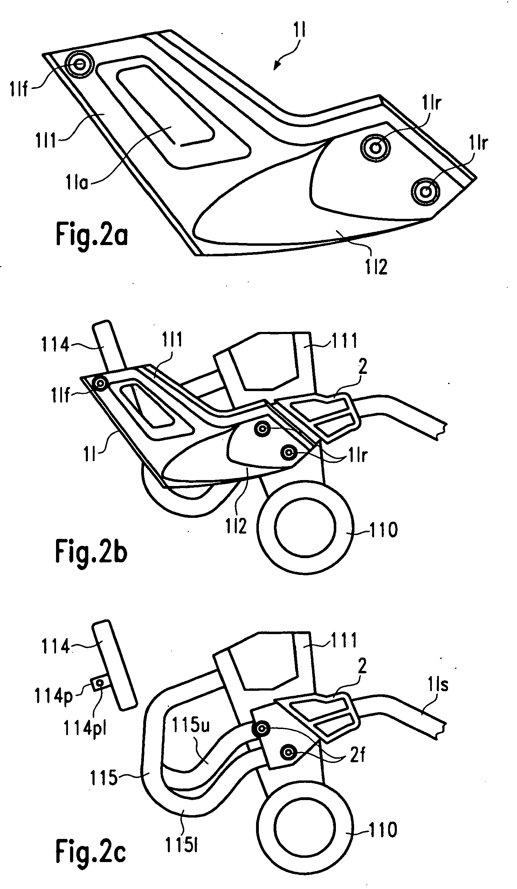

In the following with reference to Figures 2a to 2c, some additional features and/or details of the side cover assembly according to the present invention will be disclosed; in Figures 2a to 2c those features which have already been described with reference to 1a and 1b are identified by the same reference numerals.

In Figure 2a there is depicted in particular a first side cover element 1l, namely the side cover element adapted to be mounted to the left side of a motorcycle as depicted in Figure 1a. Said first left side cover element 1l comprises a front portion 1l1 and a rear portion 1l2 with said front and rear portions 1l1 and 1l2 extending from a central portion of the side cover element 1l. In particular, the front end portion 1l1 extends from the central portion so as to face towards the front of the motorcycle once the side cover element 1l has been mounted to the motorcycle as depicted in Figure 1; on the contrary, the rear end portion 112 extends from the central portion so as to face toward the rear of the motorcycle once the side cover element 1l has been mounted to the motorcycle as depicted in Figure 1a. Moreover, the rear end portion 1l2 extends from the central portion substantially horizontally or so as to be slightly inclined toward the top. The front end portion 1l1 extends from the central portion at a predetermined angle; in particular as apparent from Figure 2a, the front end portion 1l1 is inclined so as to face toward the top and the front of the motorcycle once the side cover element 1l has been mounted to the motorcycle 100 as depicted in Figure 1a. The respective inclination of the front and rear end portions 1l1 and 1l2 or, in other words the direction along which said front and rear end portions 1l1 and 1l2 extend from the central portion, confers to the first left side cover element 1l a slightly curved shape. It is this slightly curved shape which allows to gain easy access to the components and/or equipment of the motorcycle 100 located behind said first left cover element 1l. Moreover, easy access to the components and/or equipment located behind the side cover element 1l is also allowed by the through aperture 1la provided in the front end portion 1l1 of the first side cover element 1l. Of course, the shape and dimension of said through aperture 1la may be selected according to the exigencies and/or circumstances; that is to say, that shapes other than the substantially rectangular shape depicted in Figure 2a may be selected for the through aperture 1la, along with convenient dimensions.

The thickness of the first side cover element 1l may also be selected according to the circumstances and for instances depending thereon which protection has to be obtained or which resistance the side cover element 1l shall offer to impacts, shocks or the like. It is also possible to select different thicknesses for corresponding different portions of the side cover element 1l; for instance, according to the embodiment depicted in Figure 2a, the thickness of the rear end portion 112 of the side cover element 1l depicted therein is larger or more than the thickness of the front end portion 1l1. In Figure 2a, reference numeral 1lf identifies front screwing means, whilst reference numerals 1lr identifies corresponding rear screwing means. Said front and rear screwing means 1lf and 1lr allows the side cover element 1l to be mounted to the motorcycles so as to be firmly fixed thereto and may comprise screws, bolts or the like.

In particular, the way the left side cover element 1l may be mounted to the motorcycle so as to be fixed thereto as depicted in Figure 1a may be well appreciated and understood when looking at figures 2b and 2c. In fact, it appears from Figure 2c that an exhaust gas pipe 115 extends from the engine 111 (for instance from the cylinder) towards the rear of the motorcycle so as to be at least partially located besides the engine or cylinder 111. Said exhaust gas pipe 115 comprises in particular a first and a second pipe 115u and 115l which join together so as to form a single pipe 1ls extending toward the rear of the motorcycle. A protective element 2 is furthermore provided, with said protective element 2 being placed on said gas pipe115 (partially on said pipes 115u, 115l and 100ls) so as to be firmly fixed thereto. The way the protective element 2 is fixed to the exhaust gas pipe 115 or parts thereof may be selected according to the circumstances; for instance, to this end fixing means such as clips or the like may be used. Alternatively, the protective element 2 may be welded to the exhaust gas pipe 115. The protective element 2 further comprises rear fixing means 2f adapted to cooperate with the rear screwing means 1lr depicted in Figure 2a. In the same way, a plate 114p extends from the radiator 114 (or a cover thereof), with said protruding plate 114p being located in proximity to the left end portion of said radiator 114 and comprising front fixing means 114pl. Said rear and front fixing means 2f and 114pl may comprise holes or recesses with an internal screw so as to be adapted to receive the screwing means 1lf and 1lr, respectively. For instance, screwed bushes or the like may be provided. The left side cover element 1l is therefore mounted to the left side of the motor cycle by fixing the front end portion 1l1 of said side cover element 1l to the plate 114p extending from the radiator 114 (or a cover thereof) by means of the front screwing means 1lf screwed into the corresponding fixing means 114pl, whilst the rear end portion 1l2 of the side cover element 1l is fixed to the protective element 2 by means of the rear screwing means 1lr received and screwed into the corresponding screwed holes or bushes 2f.

As anticipated above, there is no need, according to the present invention, to provide a special frame for the purpose of mounting the side cover elements of the side cover assembly to the motorcycle. On the contrary, the side cover elements are mounted or fixed to component parts and/or equipment of the motorcycle.

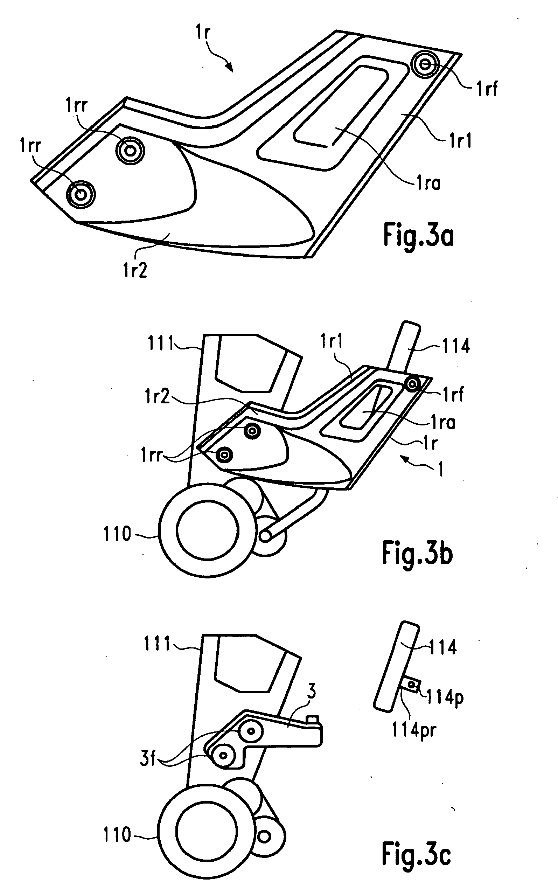

In the following, with reference Figures 3a to 3c, further details and/or features of the side cover assembly according to the present invention will be described; as usual, those features of the side cover assembly according to the present invention which have already been described with reference to previous figures are identified in Figures 3a to 3c by the same reference numerals.

In Figure 3a there is depicted in particular a second side cover element 1r, namely the right side cover element adapted to be mounted to the right side of a motorcycle as depicted in Figure 1b. Said second right side cover element 1r comprises a front portion 1r1 and a rear portion 1r2, with said front and rear portions 1r1 and 1r2 extending from a central portion of the side cover element 1r. In particular, and similarly to the case of the left side cover element 1l disclosed above, the front end portion 1r1 extends from the central portion so as to face towards the front of the motorcycle once the side cover element 1l has been mounted to the motorcycle as depicted in Figure 1b; on the contrary, the rear end portion 1r2 extends from the central portion so as to face toward the rear of the motorcycle once the side cover element 1l has been mounted to the motorcycle as depicted in Figures 1b and 3b. Moreover, the rear end portion 1r2 extends from the central portion substantially horizontally or so as to be slightly inclined toward the top. The front end portion 1r1 extends from the central portion at a predetermined angle; in particular as apparent from Figure 2b, the front end portion 1r1 is inclined so as to face toward the top and the front of the motorcycle once said right side cover element 1r has been mounted to the motorcycle as depicted in Figures 1b and 3b. Again, the respective inclination of the front and rear end portions 1r1 and 1r2 or, in other words the direction along which said front and rear end portions 1r1 and 1r2 extends from the central portion, confers to the second right side cover element 1r a light curved shape. A through aperture 1ra is provided also in the case of the right side cover element 1r, the shape and dimensions of said aperture 1ra being substantially similar to those of the aperture 1la of the left side cover element 1l. It results therefore that the right side cover element 1r may be provided so as to be substantially similar to the left side cover element 1l as on its shape, configuration, appearance and dimensions. Accordingly, the considerations as stated above relating to the advantages offered by the left side cover element 1l in terms of protection offered, easy access to equipments located behind it and so on, also apply to the right side cover element 1r. However, it has to be noted that even left and right side cover elements differing in shape and/or dimensions may be provided according to the exigencies and/or circumstances, for instance for exploiting different purposes.

In Figure 3a, reference numeral 1rf identifies front screwing means, whilst reference numerals 1rr identifies corresponding rear screwing means. Said front and rear screwing means 1rf and 1rr allows the side cover element 1r to be mounted to a motorcycles so as to be firmly fixed thereto and may comprise screws, bolts or the like.

In particular the way the right side cover element 1r may be mounted to the motorcycle so as to be fixed thereto as depicted in Figures 1a and 3b may be well appreciated and understood when looking at figures 3b and 3c. In fact, it appears that from Figure 3c that the motorcycle depicted therein comprises a coolant fluid tank 3 located below the fuel tank and in proximity of the engine or cylinder 111. Said coolant fluid or liquid tank 3 further comprises rear fixing means 3f adapted to cooperate with the rear screwing means 1rr depicted in Figure 3a. A right plate 114p extends moreover from the radiator 114 (or a cover thereof) with said protruding plate 114p being located in proximity to the right end portion of said radiator 114 and comprising front fixing means 114pr. Said rear and front fixing means 3f and 114pr may comprise holes or recesses with an internal screw so as to be adapted to receive the screwing means 1rr and 1rf. For instance, screwed bushes or the like may be provided to this end. The right side cover element 1r is therefore mounted to the right side of the motor cycle in such a way that the front end portion 1r1 of said side cover element 1ris fixed to the plate 114p extending from the radiator 114 (or a cover thereof) by means of the front screwing means 1rf screwed into the fixing means 114pr, whilst the rear end portion 1r2 of the side cover element 1r is fixed to coolant liquid tank 3 by means of the rear screwing means 1rr received into the corresponding screwed holes or bushes 3f.

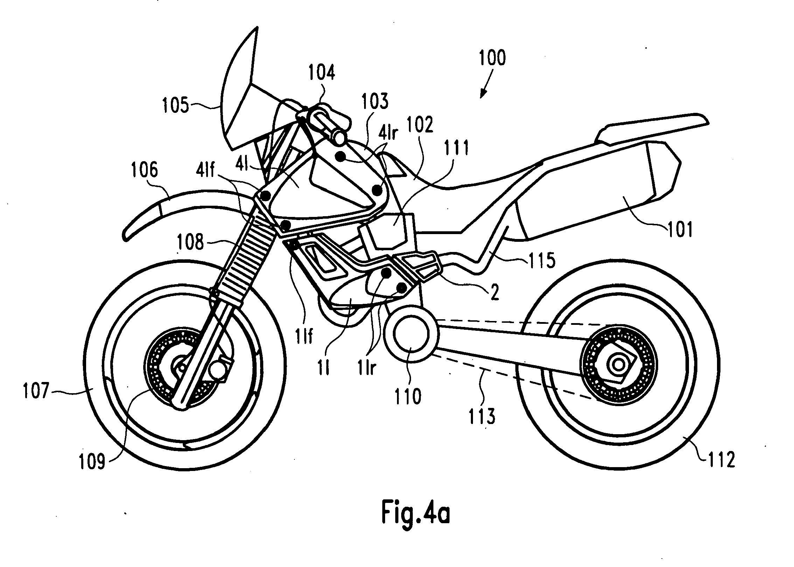

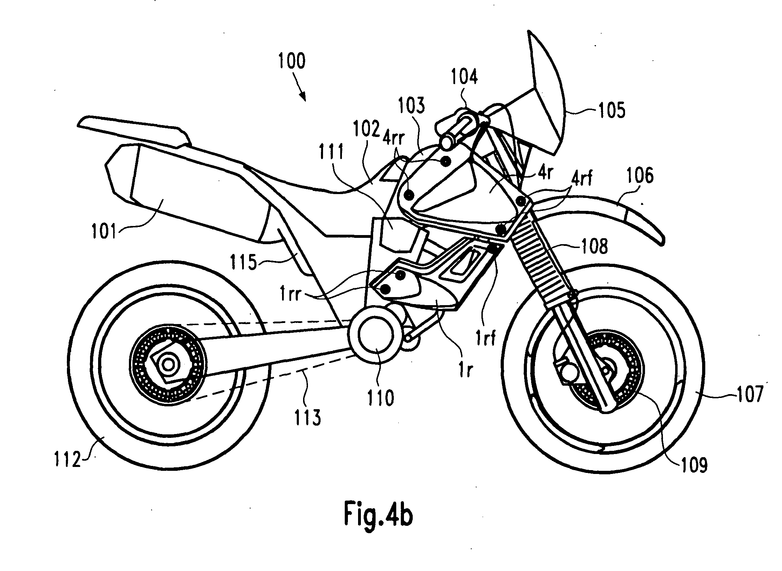

In the following, with reference to Figures 4a and 4b, a further embodiment of the side cover assembly according to the present invention will be described; again, those features which have already been described above with reference to previous figures are identified in Figures 4a and 4b by the same reference numerals.
As apparent from Figure 4a, a third left side cover element 4l is mounted to the left side of the motorcycle 100; in the same way, as apparent from figure 4b, a fourth right side cover element 4r is mounted to the right side of the motorcycle 100. The shape of the third and fourth side cover elements 4l and 4r is selected so as to match with that of the first and second side cover elements 1l and 1r, respectively. Moreover, the third and fourth side cover elements 4l and 4r are fixed to the fuel tank 103 on opposite sides thereof; to this end, front and rear screwing means 4lf and 4lr (for the third left cover element 41), along with front and rear screwing means 4rf and 4rr (for the fourth right cover element 4r) such as screws, bolts or the like may be provided, similar to the screwing means 1lf, 1lr, 1 rf and 1rr used for fixing the first second side cover elements 1l and 1r to the motorcycle. Moreover, corresponding fixing means are mounted to the fuel tank on opposite sides thereof, with said fixing means being adapted to cooperate with said screwing means 4lf, 4lr, 4rf and 4rr, respectively, in particular being adapted to receive said screws or bolts. To this end, screwed holes or bushes similar to those provided on the protective element 2 and the coolant liquid tank 3 may be used. The embodiment depicted in Figures 4a and 4b may be preferred in those circumstances in which a better protection has to be reached and/or obtained. However, most of the advantages offered by the embodiment depicted in Figures 1a, 1b, 2a to 2c and 3a to 3c are still offered by the embodiment depicted in Figures 4a and 4b. In fact, when the need arises to gain access to components and/or equipment located below the fuel tank of the motorcycle from one side thereof, let say from the right side of the motorcycle, one or both of the side cover elements 4r and 1r may be removed.

Therefore, it has been demonstrated with the above disclosure that the side cover assembly according to the present invention allows to overcome or at least to strongly reduce or minimize the drawbacks effecting the prior art side cover assemblies. In particular, it has been demonstrated that the side cover assembly according to the present invention allows the side cover elements to be quickly and easily mounted to and removed from the motorcycle. Moreover, adequate protection is still offered, without the overall look, appearance and aerodynamic of the motorcycle being negatively affected or influenced. On the contrary, these aspects are even improved due to the reduced dimensions of each single side cover element.

Moreover, it is no longer requested to provide a mainframe for the motorcycle adapted to support the side cover elements; on the contrary, according to the present invention, said side cover elements may be easily and quickly mounted to components and/or equipment of the motorcycle. Furthermore, should the side cover elements of the side cover assembly according to the present invention become damaged or broken due for instance to impacts, shocks of the like, the damaged side cover elements may be quickly and easily substituted at low cost.

While the present invention has been described with reference to the particular embodiments depicted in the drawings, it has to be understood that the present invention is not limited to the particular embodiments described but rather, that various elements and modifications may be introduced into the embodiments described without departing from the scope of the present invention, which is defined by the appended claims.

For instance, it will appear clear to those skilled in the art that the components and/or equipment selected for supporting the side cover elements according to the present invention may be chosen and selected according to the exigencies and/or circumstances. For instance, the crank case may be selected instead of the exhaust gas pipe whilst equipment other than the radiator may be equally selected Furthermore, instead of the left side cover element 1l, the right side cover element 1r may be fixed to the exhaust gas pipe, for instance in the case of those motorcycles wherein the exhaust gas pipe extends on the right side of the motorcycle.

## Claims

1. A side cover assembly (1) for a motorcycle (100) comprising a frame supporting a cylinder (111) and components of said motorcycle, said side cover assembly (1) comprising first and second side cover elements (1l, 1r) adapted to be mounted to said motorcycle (100) on opposite sides thereof, respectively, in proximity of said cylinder,
said first and second side cover elements (1l, 1r) comprising corresponding front end portions (1l1, 1r1) facing toward the front of said motorcycle (100) once said first and second side cover elements (1l, 1r) have been mounted to said motorcycle (100), said front end portions (1l1, 1r1) of said first and second side cover elements (1l, 1r), respectively, being adapted to be fixed to the radiator (114) of said motorcycle (100), on opposite sides thereof;
said first end second side cover elements (1l, 1r) comprising corresponding rear end portions (1l2, 1r2) facing toward the rear of said motorcycle (100) once said first and second side cover elements (1l, 1r) have been mounted to said motorcycle (100), said rear end portions (1l2, 1r2) of said first and second side cover elements (1l, 1r) being adapted to be fixed to one or more of said components located on opposite sides of said cylinder (111) and other than said radiator (114);
**characterized in that**
said assembly further comprises a protective element (2) adapted to be mounted to the exhaust gas pipe (115) of said motorcycle (100), and **in that** said rear end portion (1l2) of at least the first one (1l) of said first and second side cover elements (1l, 1r) is adapted to be fixed to said protective element (2).

2. An assembly as claimed in claim 1;
**characterized in that:**
said assembly (1) further comprises front screwing means (1lf, 1rf) such as screws, bolts or the like, and **in that** said front end portions (1l1, 1r1) of said first and second side cover elements (1l, 1r) are adapted to be fixed to said radiator (114), on opposite sides thereof, by means of said front screwing means (1lf, 1rf).

3. An assembly as claimed in claim 2;
**characterized in that:**
said assembly further comprises fixing portions (114p) adapted to be fixed to said radiator or a cover thereof on opposite sides thereof so as to extend from said radiator or cover thereof, and comprising front fixing means (114pl 114pr), and **in that** said front fixing means (114pl, 114pr) are adapted to receive said front screwing means (1lf, 1rf).

4. An assembly as claimed in one of claims 1 to 3;
**characterized in that:**
said assembly further comprises first and second rear screwing means (1lr, 1rr) such as screws, bolts or the like, and **in that** said rear end portion (1l2) of at least the first one (1l) of said first and second side cover elements (1l, 1r) is adapted to be fixed to said protective element (2) by means of said first rear screwing means (1lr), respectively.

5. An assembly as claimed in claim 4;
**characterized in that:**
Said protective element (2) comprises first rear fixing means (2f) adapted to receive said rear screwing means (1lr).

6. An assembly as claimed in one of claims 1 to 5;
**characterized in that:**
Said rear end portion (1r2) of at least the second one (1r) of said first and second side cover elements (1l, 1r) is adapted to be fixed to the coolant liquid tank (3) of said motorcycle (100).

7. An assembly as claimed in claim 6;
**characterized in that:**
Said assembly further comprises second rear fixing means (3f) adapted to be fixed to said coolant liquid tank (3), and **in that** said second rear fixing means (3f) are adapted to receive said second rear screwing means (1rr).

8. An assembly as claimed in one of claims 1 to 7;
**characterized In that:**
at least one of said first and second side cover elements (1l, 1r) comprises a central portion, with said front and rear portions extending from said central portion at a predefined angle so as to allow access to the area behind said side one cover element in proximity of said cylinder once said one side cover element has been mounted to said motorcycle (100).

9. An assembly as claimed in one of claims 1 to 8;
**characterized in that:**
at least one of said first and second side cover element comprises a through aperture (1la, 1ra) allowing access to the area behind said side one cover element in proximity of said cylinder (111) once said one side cover element has been mounted to said motorcycle (100).

10. An assembly as claimed in one of claims 1 to 9;
**characterized in that:**
said side cover assembly further comprises third and fourth side cover elements (41, 4r) adapted to be mounted to said motorcycle on opposite sides thereof, respectively, in proximity of the tank (103) of said motorcycle (100).

11. An assembly as claimed in claim 10;
**characterized in that:**
said third and fourth side cover elements (41, 4r) comprise corresponding front end portions facing toward the front of said motorcycle once said third and fourth side cover elements (41, 4r) have been mounted to said motorcycle (100), and **in that** said front end portions of said third and fourth side cover elements (41, 4r) are adapted to be fixed to the front portion of the fuel tank (103) of said motorcycle (100), on opposite sides thereof.

12. An assembly as claimed in claim 11;
**characterized in that:**
said front end portions of said third and fourth side cover elements (41, 4r) are adapted to be fixed to said front portion of said fuel tank (103), on opposite sides thereof, by means of screwing means (4lf, 4rf).

13. An assembly as claimed in one of claims 10 to 12;
**characterized in that:**
said third and fourth side cover elements (41, 4r) comprise corresponding rear end portions facing toward the rear of said motorcycle (100) once said third and fourth side cover elements (41, 4r) have been mounted to said motorcycle (100), and **in that** said rear end portions of said third and fourth side cover elements (41, 4r) are adapted to be fixed to the rear end portion of said fuel tank (103) of said motorcycle (100), on opposite sides thereof.

14. An assembly as claimed in claim 13;
**characterized in that:**
said rear end portions of said third and fourth side cover elements (41, 4r) are adapted to be fixed to said rear end portion of said fuel tank (103), on opposite sides thereof, by means of screwing means (4lr, 4rr) such as screws, bolts or the like.

15. A motorcycle (100) comprising at least a main frame supporting a cylinder (111) and components of said motorcycle; said motorcycle further comprising a radiator (114) and an exhaust gas pipe (115);
**characterized in that:**
Said motorcycle (100) comprises a side cover assembly (1) as claimed in one of claims 1 to 14, said first and second side cover elements (1l, 1r) being mounted to said motorcycle (100), on opposite side thereof said front end portions (1l1, 1r1) of said first and second side cover elements (1l, 1r), respectively, being fixed to said radiator (114), on opposite sides thereof; said protective element (2) being mounted to said exhaust gas pipe (115); the rear end portion (1l2) of at least the first one (1l) of said first and second side cover elements (1l, 1r) being fixed to said protective element (2) .

16. A motorcycle as claimed in claim 15;
**characterized in that:**
Said first and second side cover elements (1l, 1r) are mounted to the left and right side, respectively, of said motorcycle (100).

17. A motorcycle as claimed in claim 15;
**characterized in that:**
Said first and second side cover elements are mounted to the right and left side, respectively, of said motorcycle.

## Patentansprüche

1. Seitenabdeckungsanordnung (1) für ein Motorrad (100), das einen Rahmen umfasst, der einen Zylinder (111) und Komponenten des Motorrads trägt, wobei die Seitenabdeckungsanordnung (1) ein erstes und ein zweites Seitenabdeckungselement (1l, 1r) umfasst, die zur Anbringung an dem Motorrad (100) jeweils an einander gegenüberliegenden Seiten desselben nahe an dem Zylinder eingerichtet sind;
das erste und das zweite Seitenabdeckungselement (1l, 1r) entsprechende vordere Endabschnitte (1l1, 1r1) umfassen, die der Vorderseite des Motorrads (100) zugewandt sind, wenn das erste und das zweite Seitenabdeckungselement (1l, 1r) an dem Motorrad (100) angebracht worden sind, wobei die vorderen Endabschnitte (1l1, 1r1) des ersten bzw. des zweiten Seitenabdeckungselementes (1l, 1r) jeweils zur Befestigung an dem Kühler (114) des Motorrades (100) an einander gegenüberliegenden Seiten desselben eingerichtet sind;
das erste und das zweite Seitenabdeckungselement (1l, 1r) entsprechende hintere Endabschnitte (1l2, 1r2) umfassen, die der Rückseite des Motorrades (100) zugewandt sind, wenn das erste und das zweite Seitenabdeckungselement (1l, 1r) an dem Motorrad (100) angebracht worden sind, wobei die hinteren Endabschnitte (1l2, 1r2) des ersten und des zweiten Seitenabdeckungselementes (1l, 1r) zum Befestigen an einer oder mehreren anderen der Komponenten als dem Kühler (114) eingerichtet sind, die sich an einander gegenüberliegenden Seiten des Zylinders (111) befinden;
**dadurch gekennzeichnet, dass**
die Anordnung des Weiteren ein schützendes Element (2) umfasst, das zur Anbringung an dem Abgasrohr (115) des Motorrades (100) eingerichtet ist, und dass der hintere Endabschnitt (112) wenigstens des ersten (1l) von dem ersten und dem Seitenabdeckungselement (1l, 1r) zur Befestigung an dem schützenden Element (2) eingerichtet ist.

2. Anordnung nach Anspruch 1;
**dadurch gekennzeichnet, dass:**
die Anordnung (1) des Weiteren vordere Schraubeinrichtungen (1lf, 1rf), wie beispielsweise Schrauben, Bolzen oder dergleichen, umfasst, und dass die vorderen Endabschnitte (1l1, 1r1) der ersten und der zweiten Seitenabdeckungselemente (1l, 1r) zur Befestigung an dem Kühler (114) an einander gegenüberliegenden Seiten desselben mittels der vorderen Schraubeinrichtungen (1lf, 1rf) eingerichtet sind.

3. Anordnung nach Anspruch 2;
**dadurch gekennzeichnet, dass:**
die Anordnung des Weiteren Befestigungsabschnitte (114p) umfasst, die zur Befestigung an dem Kühler oder einer Abdeckung desselben an einander gegenüberliegenden Seiten desselben/derselben so eingerichtet sind, dass sie sich von dem Kühler oder der Abdeckung desselben erstrecken, und die vordere Befestigungseinrichtungen (114pl, 114pr) umfassen, und dadurch, dass die vorderen Befestigungseinrichtungen (114pl, 114pr) zum Aufnehmen der vorderen Schraubeinrichtungen (1lf, 1rf) eingerichtet sind.

4. Anordnung nach einem der Ansprüche 1 bis 3;
**dadurch gekennzeichnet, dass:**
die Anordnung des Weiteren erste und zweite hintere Schraubeinrichtungen (1lr, 1rr), wie beispielsweise Schrauben, Bolzen oder dergleichen, umfasst, und dass der hintere Endabschnitt (112) wenigstens des ersten (1l) von dem ersten und dem zweiten Seitenabdeckungselemente (1l, 1r) zur Befestigung an dem schützenden Element (2) jeweils mittels der ersten hinteren Schraubeinrichtungen (1lr) eingerichtet ist.

5. Anordnung nach Anspruch 4;
**dadurch gekennzeichnet, dass:**
das schützende Element (2) erste hintere Befestigungseinrichtungen (2f) umfasst, die zum Aufnehmen der hinteren Schraubeinrichtung (1lr) eingerichtet sind.

6. Anordnung nach einem der Ansprüche 1 bis 5;
**dadurch gekennzeichnet, dass:**
der hintere Endabschnitt (1r2) wenigstens des zweiten (1r) von dem ersten und dem zweiten Seitenabdeckungselement (1l, 1r) zur Befestigung an dem Kühlflüssigkeitsbehälter (3) des Motorrades (100) eingerichtet ist.

7. Anordnung nach Anspruch 6;
**dadurch gekennzeichnet, dass:**
die Anordnung des Weiteren zweite hintere Befestigungseinrichtungen (3f) umfasst, die zur Befestigung an dem Kühlflüssigkeitsbehälter (3) eingerichtet sind, und dadurch, dass die zweiten hinteren Befestigungseinrichtungen (3f) zum Aufnehmen des zweiten hinteren Schraubmechanismus (1rr) eingerichtet sind.

8. Anordnung nach einem der Ansprüche 1 bis 7;
**dadurch gekennzeichnet, dass:**
wenigstens eines von dem ersten und dem zweiten Seitenabdeckungselement (1l, 1r) einen Mittelabschnitt umfasst, wobei sich der vordere und der hintere Abschnitt von dem Mittelabschnitt aus in einem vordefinierten Winkel so erstrecken, dass Zugang zu dem Bereich hinter dem einen Seitenabdeckungselement in der Nähe des Zylinders zugelassen wird, wenn das eine Seitenabdeckungselement an dem Motorrad (100) angebracht worden ist.

9. Anordnung nach einem der Ansprüche 1 bis 8;
**dadurch gekennzeichnet, dass:**
wenigstens eines von dem ersten und dem zweiten Seitenabdeckungselement eine Durchgangsöffnung (1la, 1ra) umfasst, die Zugang zu dem Bereich hinter dem einen Seitenabdeckungselement in der Nähe des Zylinders (111) zulässt, wenn das eine Seitenabdeckungselement an dem Motorrad (100) angebracht worden ist.

10. Anordnung nach einem der Ansprüche 1 bis 9;
**dadurch gekennzeichnet, dass:**
die Seitenabdeckungsanordnung des Weiteren ein drittes und ein viertes Seitenabdeckungselement (4l, 4r) umfasst, die zur Anbringung an dem Motorrad an einander gegenüberliegenden Seiten desselben jeweils in der Nähe des Tanks (103) des Motorrades (100) eingerichtet sind.

11. Anordnung nach Anspruch 10;
**dadurch gekennzeichnet, dass:**
das dritte und das vierte Seitenabdeckungselement (41, 4r) entsprechende vordere Endabschnitte umfassen, die der Vorderseite des Motorrades zugewandt sind, wenn das dritte und das vierte Seitenabdeckungselement (41, 4r) an dem Motorrad (100) angebracht worden sind, und dass die vorderen Endabschnitte des dritten und des vierten Seitenabdeckungselementes (41, 4r) zur Befestigung an dem vorderen Endabschnitt des Kraftstofftanks (103) des Motorrades (100) an einander gegenüberliegenden Seiten desselben eingerichtet sind.

12. Anordnung nach Anspruch 11;
**dadurch gekennzeichnet, dass:**
die vorderen Endabschnitte des dritten und des vierten Seitenabdeckungselementes (41, 4r) zur Befestigung an dem vorderen Endabschnitt des Kraftstofftanks (103) an einander gegenüberliegenden Seiten desselben mittels Schraubeinrichtungen (4lf, 4rf) eingerichtet sind.

13. Anordnung nach einem der Ansprüche 10 bis 12;
**dadurch gekennzeichnet, dass:**
das dritte und das vierte Seitenabdeckungselement (41, 4r) entsprechende hintere Endabschnitte umfassen, die der Rückseite des Motorrads (100) zugewandt sind, wenn das dritte und das vierte Seitenabdeckungselement (4l, 4r) an dem Motorrad (100) angebracht worden sind, und dadurch, dass die hinteren Endabschnitte des dritten und vierten Seitenabdeckungselementes (41, 4r) zur Befestigung an dem hinteren Endabschnitt des Kraftstofftanks (103) des Motorrades (100) an einander gegenüberliegenden Seiten desselben eingerichtet sind.

14. Anordnung nach Anspruch 13;
**dadurch gekennzeichnet, dass:**
die hinteren Endabschnitte des dritten und des vierten Seitenabdeckungselementes (41, 4r) zur Befestigung an dem hinteren Endabschnitt des Kraftstofftanks (103) an einander gegenüberliegenden Seiten mittels Schraubeinrichtungen (4lr, 4rr), wie beispielsweise Schrauben, Bolzen oder dergleichen, eingerichtet sind.

15. Motorrad (100), das wenigstens einen Hauptrahmen umfasst, der einen Zylinder (111) und Komponenten des Motorrades trägt, wobei das Motorrad des Weiteren einen Kühler (114) und ein Abgasrohr (115) umfasst;
**dadurch gekennzeichnet, dass:**
das Motorrad (100) eine Seitenabdeckungsanordnung (1) nach einem der Ansprüche 1 bis 4 umfasst, wobei das erste und das zweite Seitenabdeckungselement (1l, 1r) an dem Motorrad (100) an einander gegenüberliegenden Seiten desselben angebracht sind, die vorderen Endabschnitte (1l1, 1r1) des ersten und des zweiten Seitenabdeckungselementes (1l, 1r) jeweils an dem Kühler (114) an einander gegenüberliegenden Seiten desselben befestigt sind, das schützende Element (2) an dem Abgasrohr (115) angebracht ist, und der hintere Endabschnitt (112) wenigstens des ersten (11) von dem ersten und dem zweiten Seitenabdeckungselement (1l, 1r) an dem schützenden Element (2) befestigt ist.

16. Motorrad nach Anspruch 15;
**dadurch gekennzeichnet, dass:**
das erste und das zweite Seitenabdeckungselement (1l, 1r) an der linken bzw. rechten Seite des Motorrades (100) angebracht sind.

17. Motorrad nach Anspruch 15;
**dadurch gekennzeichnet, dass:**
das erste und das zweite Seitenabdeckungselement an der rechten bzw. der linken Seite des Motorrades angebracht sind.

## Revendications

1. Ensemble de capots latéraux (1) pour une motocyclette (100) comprenant un cadre supportant un cylindre (111) et des composants de ladite motocyclette, ledit ensemble de capots latéraux (1) comprenant des premier et deuxième éléments de capots latéraux (11, 1r) adaptés pour être montés sur ladite motocyclette (100) sur des côtés opposés de celle-ci, respectivement, à proximité dudit cylindre,
lesdits premier et deuxième éléments de capots latéraux (11, 1r) comprenant des parties d'extrémité avant (111, 1r1) correspondantes orientées vers l'avant de ladite motocyclette (100) une fois que lesdits premier et deuxième éléments de capots latéraux (11, 1r) ont été montés sur ladite motocyclette (100), lesdites parties d'extrémité avant (1l1, 1r1) desdits premier et deuxième éléments de capots latéraux (11, 1r), respectivement, étant adaptées pour être fixées au radiateur (114) de ladite motocyclette (100) sur des côtés opposés de celui-ci ;
lesdits premier et deuxièmes éléments de capots latéraux (11, 1r) comprenant des parties d'extrémité arrière (112, 1r2) correspondantes orientées vers l'arrière de ladite motocyclette (100) une fois que lesdits premier et deuxième éléments de capots latéraux (11, 1r) ont été montés sur ladite motocyclette (100), lesdites parties d'extrémité arrière (112, 1r2) desdits premier et deuxième éléments de capots latéraux (11, 1r) étant adaptées pour être fixées à un ou plusieurs desdits composants situés sur des côtés opposés dudit cylindre (111) et autres que ledit radiateur (114) ;
**caractérisé en ce que :**
ledit ensemble comprend en outre un élément de protection (2) adapté pour être monté sur le tuyau de gaz d'échappement (115) de ladite motocyclette (100), et **en ce que** ladite partie d'extrémité arrière (112) d'au moins le premier (11) desdits premier et deuxième éléments de capots latéraux (11, 1r) est adaptée pour être fixée audit élément de protection (2).

2. Ensemble selon la revendication 1,
**caractérisé en ce que :**
ledit ensemble (1) comprend en outre des moyens de vissage avant (1lf, 1rf) tels que des vis, des boulons ou similaire, et **en ce que** lesdites parties d'extrémité avant (1l1, 1r1) desdits premier et deuxième éléments de capots latéraux (11, 1r) sont adaptées pour être fixées audit radiateur (114), sur des côtés opposés de celui-ci, au moyen desdits moyens de vissage avant (1lf, 1rf).

3. Ensemble selon la revendication 2,
**caractérisé en ce que :**
ledit ensemble comprend en outre des parties de fixation (114p) adaptées pour être fixées audit radiateur ou à un capot de celui-ci sur des côtés opposés de celui-ci de manière à s'étendre à partir dudit radiateur ou du capot de celui-ci, et comprenant des moyens de fixation avant (114pl, 114pr), et **en ce que** lesdits moyens de fixation avant (114pl, 114pr) sont adaptés pour recevoir lesdits moyens de vissage avant (1lf, 1rf).

4. Ensemble selon l'une des revendications 1 à 3,
**caractérisé en ce que :**
ledit ensemble comprend en outre des premier et deuxième moyens de vissage arrière (1lr, 1rr) tels que des vis, des boulons ou similaire, et **en ce que** ladite partie d'extrémité arrière (1l2) d'au moins le premier (11) desdits premier et deuxième éléments de capots latéraux (11, 1r) est adaptée pour être fixée audit élément de protection (2) au moyen desdits premiers moyens de vissage arrière (1lr), respectivement.

5. Ensemble selon la revendication 4,
**caractérisé en ce que :**
ledit élément de protection (2) comprend des premiers moyens de fixation arrière (2f) adaptés pour recevoir lesdits moyens de vissage arrière (1lr).

6. Ensemble selon l'une des revendications 1 à 5,
**caractérisé en ce que :**
ladite partie d'extrémité arrière (1r2) d'au moins le deuxième (1r) desdits premier et deuxième éléments de capots latéraux (11, 1r) est adaptée pour être fixée au réservoir de liquide de refroidissement (3) de ladite motocyclette (100).

7. Ensemble selon la revendication 6,
**caractérisé en ce que :**
ledit ensemble comprend en outre des deuxièmes moyens de fixation arrière (3f) adaptés pour être fixés audit réservoir de liquide de refroidissement (3), et **en ce que** lesdits deuxièmes moyens de fixation arrière (3f) sont adaptés pour recevoir lesdits deuxièmes moyens de vissage arrière (1rr).

8. Ensemble selon l'une des revendications 1 à 7,
**caractérisé en ce que :**
au moins l'un desdits premier et deuxième éléments de capots latéraux (11, 1r) comprend une partie centrale, lesdites parties avant et arrière s'étendant de ladite partie centrale selon un angle prédéfini de manière à permettre un accès à la zone derrière ledit un élément de capot latéral à proximité dudit cylindre une fois que ledit un élément de capot latéral a été monté sur ladite motocyclette (100).

9. Ensemble selon l'une des revendications 1 à 8,
**caractérisé en ce que :**
au moins l'un desdits premier et deuxième éléments de capots latéraux comprend une ouverture traversante (lla, 1ra) permettant un accès à la zone derrière ledit un élément de capot latéral à proximité dudit cylindre (111) une fois que ledit un élément de capot latéral a été monté sur ladite motocyclette (100).

10. Ensemble selon l'une des revendications 1 à 9,
**caractérisé en ce que :**
ledit ensemble de capots latéraux comprend en outre des troisième et quatrième éléments de capots latéraux (41, 4r) adaptés pour être montés sur ladite motocyclette sur des côtés opposés de celle-ci, respectivement, à proximité du réservoir (103) de ladite motocyclette (100).

11. Ensemble selon la revendication 10,
**caractérisé en ce que :**
lesdits troisième et quatrième éléments de capots latéraux (41, 4r) comprennent des parties d'extrémité avant correspondantes orientées vers l'avant de ladite motocyclette une fois que lesdits troisième et quatrième éléments de capots latéraux (41, 4r) ont été montés sur ladite motocyclette (100), et **en ce que** lesdites parties d'extrémité avant desdits troisième et quatrième éléments de capots latéraux (41, 4r) sont adaptées pour être fixées à la partie avant du réservoir de carburant (103) de ladite motocyclette (100), sur des côtés opposés de celui-ci.

12. Ensemble selon la revendication 11,
**caractérisé en ce que :**
lesdites parties d'extrémité avant desdits troisième et quatrième éléments de capots latéraux (41, 4r) sont adaptées pour être fixées à ladite partie avant dudit réservoir de carburant (103), sur des côtés opposés de celui-ci, par des moyens de vissage (4lf, 4rf) .

13. Ensemble selon l'une des revendications 10 à 12,
**caractérisé en ce que :**
lesdits troisième et quatrième éléments de capots latéraux (41, 4r) comprennent des parties d'extrémité arrière correspondantes orientées vers l'arrière de ladite motocyclette (100) une fois que lesdits troisième et quatrième éléments de capots latéraux (41, 4r) ont été montés sur ladite motocyclette (100), et **en ce que** lesdites parties d'extrémité arrière desdits troisième et quatrième éléments de capots latéraux (41, 4r) sont adaptées pour être fixées à la partie d'extrémité arrière dudit réservoir de carburant (103) de ladite motocyclette (100), sur des côtés opposés de celui-ci.

14. Ensemble selon la revendication 13,
**caractérisé en ce que :**
lesdites parties d'extrémité arrière desdits troisième et quatrième éléments de capots latéraux (41, 4r) sont adaptées pour être fixées à ladite partie d'extrémité arrière dudit réservoir de carburant (103), sur des côtés opposés de celui-ci, par des moyens de vissage (4lr, 4rr) tels que des vis, des boulons ou similaire.

15. Motocyclette (100) comprenant au moins un cadre principal supportant un cylindre (111) et des composants de ladite motocyclette ; ladite motocyclette comprenant en outre un radiateur (114) et un tuyau d'échappement (115) ;
**caractérisée en ce que :**
ladite motocyclette (100) comprend un ensemble de capots latéraux (1) selon l'une des revendications 1 à 14, lesdits premier et deuxième éléments de capots latéraux (11, 1r) étant montés sur ladite motocyclette (100), sur des côtés opposés de celle-ci, lesdites parties d'extrémité avant (1l1, 1r1) desdits premier et deuxième éléments de capots latéraux (11, 1r), respectivement, étant fixées audit radiateur (114), sur des côtés opposés de celui-ci ; ledit élément de protection (2) étant monté sur ledit tuyau d'échappement (115) ; la partie d'extrémité arrière (112) d'au moins le premier (11) desdits premier et deuxième éléments de capots latéraux (11, 1r) étant fixée audit élément de protection (2).

16. Motocyclette selon la revendication 15,
**caractérisée en ce que :**
lesdits premier et deuxième éléments de capots latéraux (11, 1r) sont montés sur les côtés gauche et droit, respectivement, de ladite motocyclette (100).

17. Motocyclette selon la revendication 15,
**caractérisée en ce que :**
lesdits premier et deuxième éléments de capots latéraux sont montés sur les côtés droit et gauche, respectivement, de ladite motocyclette.
